(19) **Europäisches Patentamt**

**European Patent Office**

**Office européen des brevets**

(11) **EP 0 927 346 B1**

(12) **EUROPÄISCHE PATENTSCHRIFT**

(45) Veröffentlichungstag und Bekanntmachung des Hinweises auf die Patenterteilung:
**10.03.2004  Patentblatt 2004/11**

(51) Int Cl.$^7$: **G01M 15/00**

(21) Anmeldenummer: **97921735.3**

(86) Internationale Anmeldenummer:
**PCT/EP1997/002086**

(22) Anmeldetag: **24.04.1997**

(87) Internationale Veröffentlichungsnummer:
**WO 1998/011416 (19.03.1998 Gazette 1998/11)**

(54) **VERFAHREN ZUM BESTIMMEN VON VERBRENNUNGSAUSSETZERN**

METHOD OF DETERMINING MISFIRING

PROCEDE POUR DETERMINER DES RATES DE COMBUSTION

(84) Benannte Vertragsstaaten:
**DE FR GB**

(30) Priorität: **12.09.1996  DE 19637094**

(43) Veröffentlichungstag der Anmeldung:
**07.07.1999  Patentblatt 1999/27**

(73) Patentinhaber: **Siemens Aktiengesellschaft 80333 München (DE)**

(72) Erfinder:
- **HOPF, Thomas
  D-64625 Bensheim (DE)**
- **STAUFENBERG, Ulrich
  D-56355 Diethardt (DE)**

(56) Entgegenhaltungen:
**WO-A-92/09875            DE-A- 4 028 131**

**Beschreibung**

Die Erfindung betrifft ein Verfahren zum Bestimmen von Verbrennungsaussetzern bei einer Brennkraftmaschine mit mehreren Zylindern.

Aus der DE 41 19 399 C2 ist eine Diagnosevorrichtung für Verbrennungskraftmaschinen bekannt, mit der bei vereinfachtem Aufbau Zünd- oder Verbrennungsprobleme bei Verbrennungskraftmaschinen zuverlässiger erfaßt werden können. Dies erfolgt dergestalt, daß Druckerfassungseinrichtungen (Sensoren) vorhanden sind, die den Zylinderinnendruck der Zylinder der Verbrennungskraftmaschine erfassen und ein entsprechendes Ausgangssignal abgeben, wobei dieses Ausgangssignal einer Differenziereinrichtung zugeführt wird, die das Ausgangssignal differenziert und ein differenziertes Ausgangssignal abgibt. Diese Diagnosevorrichtung hat den Nachteil, daß Druckerfassungseinrichtungen für die Erfassung des Zylinderinnendruckes der Zylinder der Verbrennungskraftmaschine erforderlich sind, wodurch am Kurbelgehäuse der Verbrennungskraftmaschine zusätzliche konstruktive Maßnahmen erforderlich sind, wodurch ein höherer Montageaufwand gegeben ist und eine Fehlerquelle hinsichtlich der Abdichtung vorhanden ist. Ausserdem unterliegen die Druckerfassungseinrichtungen erhöhten Anforderungen insbesondere hinsichtlich der Temperaturbeständigkeit, so daß diese Druckerfassungseinrichtungen entsprechend kostenintensiv sind.

Der Erfindung liegt daher die Aufgabe zugrunde, mit einfachen Mitteln ein Verfahren anzugeben, mit dem zuverlässig die Verbrennungsaussetzer in wenigstens einem Zylinder der Brennkraftmaschine bestimmt werden kann.

Diese Aufgabe ist durch die Merkmale des Patentanspruchs 1 gelöst.

Es ist bekannt, daß bei Verbrennungsaussetzern eine Abbremsung der Kurbelwelle der Brennkraftmaschine erfolgt. Diese Abbremsung kann über die Messung der Veränderung von aufeinanderfolgenden $180°$-Zeiten erfaßt werden. Die Abbremsung (negative Beschleunigung) der Kurbelwelle reicht als alleinige Größe aber nicht aus, um Verbrennungsaussetzer zu erkennen, bzw. um solche von anderen Einflüssen, die eine negative Winkelbeschleunigung der Kurbelwelle hervorrufen (beispielsweise Einflüsse aus dem Antriebsstrang eines Fahrzeuges, in dem die Brennkraftmaschine angeordnet ist), zu unterscheiden. Daher ist erfindungsgemäß zum Bestimmen von Verbrennungsaussetzern vorgeschlagen, daß der Kurbelkreis der Kurbelwelle (also eine Umdrehung) in vier Bereiche (Segmente) zu je $90°$ bei einer Vierzylinder-Brennkraftmaschine eingeteilt wird, so daß sich pro Umdrehung je zwei Verdichtungszeiten und zwei Expansionszeiten ergeben. Bei einer Sechszylinder-Brennkraftmaschine erfolgt die Einteilung in sechs Segmente zu je $60°$, d. h. allgemein, daß ein Kurbelkreis ($360°$) durch die Anzahl der Zylinder der Brennkraftmaschine geteilt wird, woraus sich die Einteilung in die Segmente und die Segmentgröße ergibt. Die Bestimmung des Verbrennungsaussetzers basiert darauf, daß zwei aufeinanderfolgende Verdichtungszeiten und Expansionszeiten für wenigstens einen Zylinder der Brennkraftmaschine ermittelt werden, wobei zum Bestimmen von Verbrennungsaussetzern ein Vergleich, insbesondere eine Addition oder eine Subtraktion, der Änderung der Verdichtungszeiten mit der Änderung der Expansionszeiten durchgeführt wird und das Ergebnis des Vergleiches ein Maß für einen Verbrennungsaussetzer ist.

Unterschreitet (oder überschreitet) das vergleichsergebnis einmalig oder mehrmals einen oberen (unteren) vorgebbaren Grenzwert, wird dies nach einer statistischen Weiterverarbeitung optisch und/oder akustisch angezeigt, kann dies in einem Fehlerspeicher abgelegt werden und darüber hinaus die Kraftstoffzufuhr zu diesem Zylinder unterbrochen werden (beispielsweise werden die entsprechenden Einspritzventile deaktiviert), wobei auch weitere Reaktionen durchführbar sind (z.B. Sperrung der $\lambda$-Regelung und der Vollastanreicherung).

In Weiterbildung der Erfindung wird das Verfahren in Abhängigkeit vorgebbarer Parameter der Brennkraftmaschine und/oder vorgebbarer Umgebungsparameter der Brennkraftmaschine durchgeführt. So wird beispielsweise das Verfahren in Abhängigkeit der Betriebstemperatur der Brennkraftmaschine nicht oder mit vorgebbaren Grenzwerten durchgeführt. Bei den vorgebbaren Umgebungsparametern der Brennkraftmaschine handelt es sich beispielsweise um Beschleunigungs- bzw. Verzögerungsvorgänge des Fahrzeuges, da sich diese direkt durch die Drehzahländerungen auf die gemessenen Expansions- und Verdichtungszeiten sowie die $180°$-Zeiten auswirken, so daß diese Umgebungseinflüsse bei der Bestimmung von Verbrennungsaussetzern berücksichtigt werden.

Weiterhin ist von Vorteil, daß direkt mit dem Vorliegen des Vergleichsergebnisses eine Aussage möglich ist, ob ein Verbrennungsaussetzer vorliegt oder nicht und darauf basierend, entweder nach einem einzelnen Verbrennungsaussetzer oder nach mehreren Verbrennungsaussetzern hintereinander, eine schnelle Reaktion (z.B. Fehlermeldung, Unterbrechung der Kraftstoffzufuhr oder dergleichen) erfolgen kann bzw. erfolgt.

In Weiterbildung der Erfindung wird das Verfahren für jeden Zylinder durchgeführt, so daß Zylinderindividuell Verbrennungsaussetzer bestimmt und erkannt werden und der betroffene Zylinder zumindest zeitweise durch Unterbrechen der Kraftstoffzufuhr deaktiviert werden kann, so daß in jedem Fall noch ein Notbetrieb gewährleistet ist für den Fall, daß ein einzelner Zylinder nicht nur zeitweise, sondern dauernd Verbrennungsaussetzer aufweist.

In Weiterbildung der Erfindung wird nach Erfassung zumindest eines Verbrennungsaussetzers, insbesondere nach einer vorgebbaren Anzahl von Verbrennungsaussetzem an einem Zylinder, ein Fehlersignal erzeugt und ausgegeben. Dieses Fehlersignal, das auch in einer Speichereinheit der Motorsteuerungsvorrichtung abgespeichert werden kann, signalisiert dem Fahrer des Fahrzeuges einen Defekt, zu dessen Behebung und zur Vermeidung weiterer Beschädigungen (insbesondere eines Katalysators, der von nicht verbranntem Kraftstoff zerstört wird) eine Werkstatt aufsuchen sollte.

Weitere Verfahrensschritte sind in den Unteransprüchen angegeben, aus denen sich entsprechende Vorteile ergeben.

Das erfindungsgemäße Verfahren ist im folgenden näher erläutert, wobei auch eine Vorrichtung zur Durchführung des Verfahrens, auf die die Erfindung nicht beschränkt ist, beschrieben ist.

Die Figuren zeigen im einzelnen:

Figur 1: Zylinderdruckverlauf einer Vierzylinder-Brennkraftmaschine mit Darstellung der 90°- und 180°-Kurbelwellenzeiten,

Figur 2: Verlauf der Kurbelwellenbeschleunigung und der 90°-Zeiten bei normalem Motorbetrieb,

Figur 3: durch Verbrennungsaussetzer bewirkte Änderung der Kurbelwellenbeschleunigung und der 90°-Zeiten,

Figur 4: durch Doppelaussetzer bewirkte Änderung der Kurbelwellenbeschleunigung und der 90°-Zeiten,

Figur 5: Vorrichtung zur Auswertung und Verarbeitung der erkannten Verbrennungsaussetzer.

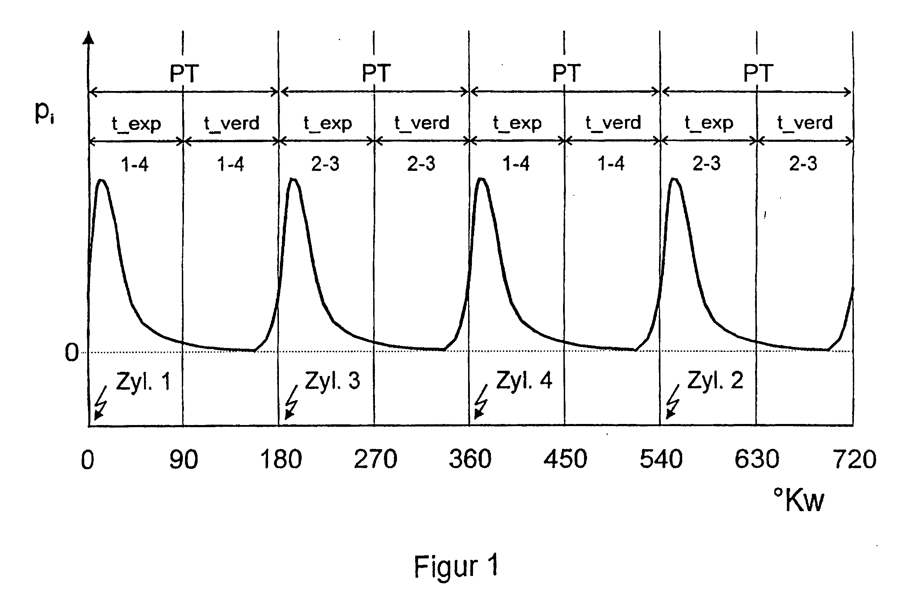

Figur 1 zeigt den Zylinderdruckverlauf einer Vierzylinder-Brennkraftmaschine mit Darstellung der 90°- und 180°-Kurbelwellenzeiten. Der Kurbelkreis ist in vier Segmente zu je 90° eingeteilt, wobei beispielsweise die Nullage im Zünd-OT des ersten bzw. des vierten Zylinders sich befindet, so daß sich pro Umdrehung je zwei Verdichtungszeiten ($t_{verd}$) und Expansionszeiten ($t_{exp}$) ergeben. Aus der Summe einer Verdichtungszeit und der zugehörigen Expansionszeit zwischen zwei aufeinanderfolgenden OT's verschiedener Zylinder ist die Periodendauer (PT) zu bilden. In vorteilhafter Weise wird dabei das Verfahren zum Bestimmen von Verbrennungsaussetzern in Abhängigkeit von vorgebbaren Umgebungsparametern der Brennkraftmaschine durchgeführt, bei dem es sich neben den schon genannten auch um das Ausgangssignal des Sensors zur Bestimmung der Periodendauer handelt. Dies erfolgt beispielsweise dergestalt, daß zwei aufeinanderfolgende 180°-Zeiten (oder ähnliche) miteinander verglichen werden. Da dies im instationären Betrieb erfolgt, müssen diese gemessenen Zeiten weitestgehend gleich sein, wobei beispielsweise die aus einer Differenzbildung der beiden Zeiten resultierende Differenz bei dem weiteren Verfahren zum Bestimmen von Verbrennungsaussetzern berücksichtigt werden kann. Damit werden insbesondere Fertigungstoleranzen, Zahnflankenfehler und dergleichen des Sensors kompensiert.

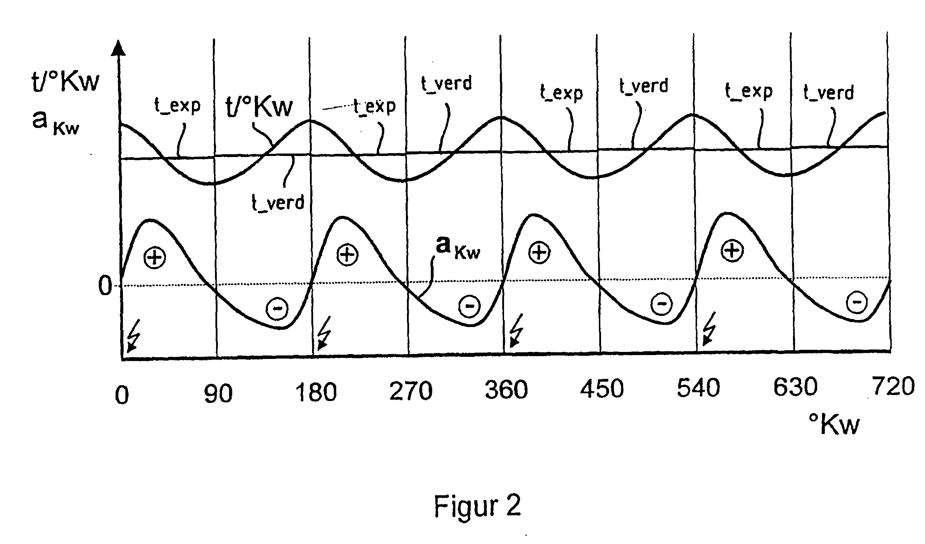

Figur 2 zeigt den Verlauf der Kurbelwellenbeschleunigung und der 90°-Zeiten bei normalem Motorbetrieb. Hierbei ist zu erkennen, daß während einer Expansionszeit die Beschleunigung der Kurbelwelle positiv ist, wohingegen sie während der Verdichtungszeit negativ ist. Bei normalem Motorbetrieb wechseln sich positive und negative Beschleunigungen alternierend ab.

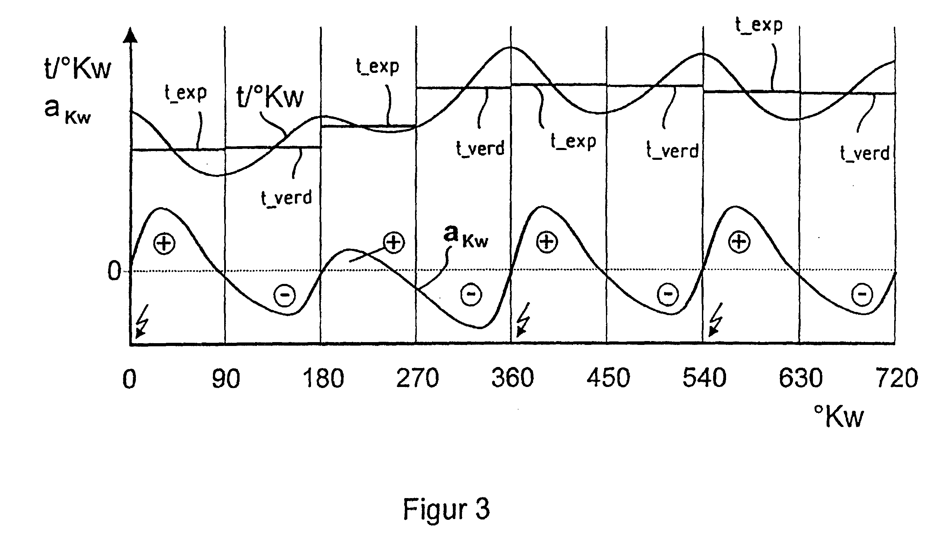

In Figur 3 sind im Gegensatz zu Figur 2 durch Verbrennungsaussetzer bewirkte Änderungen der Kurbelwellenbeschleunigung und der 90°-Zeiten gezeigt. Aufgrund eines Verbrennungsaussetzers (zwischen 180° Kurbelwinkel und 270° Kurbelwinkel) kommt es zu einer geringeren positiven Beschleunigung und zu einer höheren negativen Beschleunigung der Kurbelwelle. Dadurch ändern sich auch die anschließenden Verdichtungs- und Expansionszeiten, so daß diese auf einem höheren Niveau liegen als vorher.

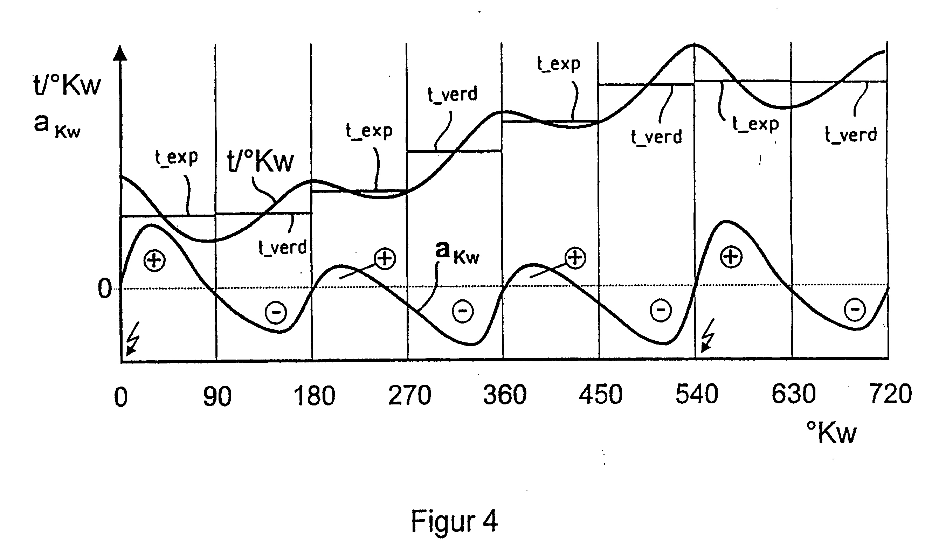

In Figur 4 ist die durch Doppelaussetzer bewirkte Änderung der Kurbelwellenbeschleunigung und der 90°-Zeiten gezeigt. Resultierend aus der geringeren positiven Beschleunigung bzw. der höheren negativen Beschleunigung der Kurbelwelle kommt es in der nachfolgenden Zeit zu einem weiteren Anstieg der Verdichtungs- und Expansionszeiten, die ebenfalls mit dem erfindungsgemäßen Verfahren, genauso wie bei Figur 3, ausgewertet werden können.

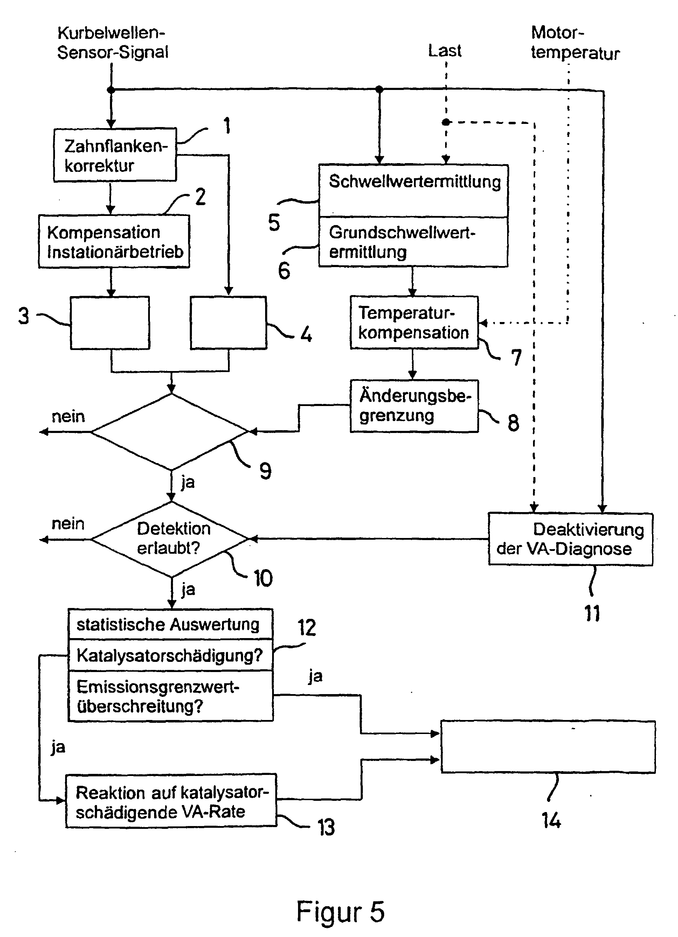

Figur 5 zeigt eine Vorrichtung zur Auswertung und Verarbeitung von erkannten Verbrennungsaussetzern.

Ein Kurbelwellensensorsignal (denkbar ist auch ein Nockenwellensensorsignal) wird einer Zahnflankenkorrektur 1 zugeführt, in der, wie schon beschrieben, zwei aufeinanderfolgende 180°-Zeiten und zugehörige 90°-Zeiten (zwei Expansions- bzw. Verdichtungszeiten) miteinander verglichen werden und ein Wert gebildet wird, der bei der folgenden Verbrennungsaussetzer-Bestimmung berücksichtigt wird. Anschließend erfolgt eine Kompensation 2 während des Instationärbetriebes, so daß beispielsweise im Falle einer plötzlichen Lastabnahme (Gaswegnehmen), die auch noch überlagert von einer ebenso schnellen Drehzahländerung durch Schwingungen im Triebstrang ist, ein Verbrennungsaussetzer erkannt würde, der jedoch keinen Verbrennungsaussetzer darstellt. Mit der Bezugsziffer 3 ist die Bildung eines Kennwertes für den Verbrennungsaussetzer bezeichnet, wobei mit der Bezugsziffer 4 die Bildung eines weiteren Wertes, ohne Berücksichtigung des Instationärbetriebes, aus dem Kurbelwellensensorsignal gebildet wird. Einer von beiden oder beide Werte können aus einem insbesondere über Last und Drehzahl aufgespannten Kennfeld änderungsbegrenzt ausgelesen werden, wobei der eine Wert den anderen korrigieren kann. Mit der Bezugsziffer 5 ist eine Schwellwertermittlung bezeichnet, bei den für den in 4 gebildeten Wert ein Schwellwert oder ein Wertebereich, gegebenenfalls unter Berücksichtigung der Last der Brennkraftmaschine, gebildet wird. Ebenso wird eine Grundschwellwertermittlung 6 durchgeführt, bei der ein Grundschwellwert bzw. ein Wertebereich für den bei 3 gebildeten Verbrennungsaussetzerwert ermittelt wird. Für einen oder beide Schwellwerte 5, 6 kann eine Temperaturkompensation 7 erfolgen, die die Motortemperatur berücksichtigt. In einer Änderungsbegrenzung 8 können diese Schwellwerte oder ein Schwellwert in Abhängigkeit vorgebbarer Parameter der Brennkraftmaschine und/oder vorgebbarer Umgebungsparameter der Brennkraftmaschine, wie beispielsweise eine abrupte Änderung der Gaspedalstellung, starke Schwingungsanregungen durch Geländeeinflüsse oder dergleichen, berücksichtigt werden.

In einer Abfrage 9 wird abgefragt, ob Verbrennungsaussetzer bestimmt werden soll oder nicht. Liegen die in 3 bzw. 4 bestimmten Verbrennungsaussetzerwerte ober- oder unterhalb der ermittelten Schwellwerte 5 oder 6 (oder außerhalb des zulässigen Wertebereiches) erfolgt keine Bestimmung von Verbrennungsaussetzern. Soll eine Bestimmung erfolgen, wird in einer Abfrage 10 abgefragt, ob die Detektion erlaubt ist oder nicht. So wird eine Detektion beispielsweise dann nicht zugelassen, wenn die Drehzahl der Brennkraftmaschine unterhalb einer vorgebbaren Drehzahl (beispielsweise eine Mindestdrehzahl unterhalb der Leerlaufdrehzahl) liegt oder vorgebbare Last- und/oder Temperaturbereiche nicht eingehalten sind. Liegt beispielsweise die Motortemperatur unterhalb einer vorgebbaren Temperatur, tritt aufgrund der inhomogenen Gemischaufbereitung sowie einer deutlichen Erhöhung der aufzubringenden Reibleistung bei diesen Temperaturen eine erhöhte Laufunruhe auf, die in Größenordnungen vordringt, die auch bei Verbrennungsaussetzern zu erwarten ist. Daher erfolgt unterhalb dieser Temperatur keine Detektion von Verbrennungsaussetzern, so daß eine Deaktivierung 11 der Verbrennungsaussetzer-Diagnose vorgenommen wird.

Wird die Detektion 10 zugelassen, erfolgt eine statistische Auswertung 12 in der Form, ob der Verbrennungsaussetzer oder die Verbrennungsaussetzer zu einer Katalysatorschädigung und/oder zu einer Emissionsgrenzwertüberschreitung führen können. Kann es zu einer Katalysatorschädigung kommen, wird eine Reaktion 13 auf katalysatorschädigende Verbrennungsaussetzer-Rate durchgeführt, wozu beispielsweise der betreffende Zylinder, der Verbrennungsaussetzer hat, abgeschaltet wird. Als Resultat daraus und auch als Resultat einer Emissionsgrenzwertüberschreitung wird weiterhin ein Fehlersignal 14 erzeugt, das dem Fahrer des Fahrzeuges optisch/akustisch angezeigt wird, in einer on-board-Diagnoseeinrichtung abgespeichert und später ausgelesen wird oder in Abhängigkeit dessen die Kraftstoffzufuhr des bzw. der betroffenen Zylinder zumindest zeitweise unterbrochen wird.

Auflistung der verwendeten Abkürzungen

OT: oberer Totpunkt eines Zylinders

°KW: Winkelbereich, den die Kurbelwelle der Brennkraftmaschine überstreicht

$\not\downarrow$Zyl.$_i$: Zündzeitpunkt eines Zylinders (i = 1, 2, 3, 4, ...)

$t_{\_exp}$: Expansionszeit eines Zylinders

$t_{\_verd}$: Verdichtungszeit eines Zylinders

PT: Periodendauer für einen Winkelbereich

$a_{KW}$: Beschleunigung der Kurbelwelle

VA: Verbrennungsaussetzer

$$VA = \frac{t_{\_verd,\,i} - t_{\_verd,\,i-1}}{t_{\_exp,\,i} - t_{\_exp,\,i-1}}$$

$$= \frac{\Delta t_{\_verd}}{\Delta t_{\_exp}}$$

oder:

$$VA = \Delta t_{\_verd} - \Delta t_{\_exp}$$

**Patentansprüche**

1. Verfahren zum Bestimmen von Verbrennungsaussetzern bei einer Brennkraftmaschine mit mehreren Zylindern, **dadurch gekennzeichnet, daß** zwei aufeinanderfolgende Verdichtungszeiten und Expansionszeiten für wenigstens einen Zylinder der Brennkraftmaschine ermittelt werden, wobei zum Bestimmen von Verbrennungsaussetzern ein Vergleich der Änderung der Verdichtungszeiten mit der Änderung der Expansionszeiten durchgeführt wird und das Ergebnis des Vergleiches ein Maß für einen Verbrennungsaussetzer ist.

2. Verfahren nach Anspruch 1, **dadurch gekennzeichnet, daß** das Verfahren in Abhängigkeit vorgebbarer Parameter der Brennkraftmaschine und/oder vorgebbarer Umgebungsparameter der Brennkraftmaschine durchgeführt wird.

**3.** Verfahren nach Anspruch 1 oder 2, wobei das Verfahren für jeden Zylinder der Brennkraftmaschine durchgeführt wird.

**4.** Verfahren nach einem der Ansprüche 1 bis 3, **dadurch gekennzeichnet, daß** nach Erfassung zumindest eines Verbrennungsaussetzers, insbesondere nach einer vorgebbaren Anzahl von Verbrennungsaussetzem, ein Fehlersignal erzeugt und ausgegeben wird.

**5.** Verfahren nach einem der vorhergehenden Ansprüche, **dadurch gekennzeichnet, daß** zumindest in Abhängigkeit von wenigstens einem Parameter der Brennkraftmaschine ein Schwellwert für das Maß für einen Verbrennungsaussetzer gebildet wird, wobei bei Über- oder Unterschreitung dieses Schwellwertes durch das Vergleichsergebnis die Erzeugung des Fehlersignales unterbleibt.

**6.** Verfahren nach einem der vorhergehenden Ansprüche, **dadurch gekennzeichnet, daß** das Verfahren bei Abweichung zulässiger Wertebereiche für die vorgebbaren Parameter der Brennkraftmaschine und/oder für die vorgebbaren Umgebungsparameter der Brennkraftmaschine nicht durchgeführt wird.

**7.** Verfahren nach einem der vorhergehenden Ansprüche, angewendet bei einer on-board-Diagnoseeinrichtung zumindest für die ein Fahrzeug, insbesondere einen Personenkraftwagen, antreibende Brennkraftmaschine.

## Claims

**1.** Method for the determination of combustion misfires in an internal combustion engine having a plurality of cylinders, **characterized in that** two successive compression times and expansion times are determined for at least one cylinder of the internal combustion engine, a comparison of the change in compression times with the change in the expansion times being carried out for the determination of combustion misfires, and the result of the comparison being a measure of a combustion misfire.

**2.** Method according to claim 1, **characterized in that** the method is carried out as a function of predeterminable parameters of the internal combustion engine and/or of predeterminable ambient parameters of the internal combustion engine.

**3.** Method according to claim 1 or 2, the method being carried out for each cylinder of the internal combustion engine.

**4.** Method according to one of claims 1 to 3, **charac-**

**terized in that**, after the detection of at least one combustion misfire, in particular after a predeterminable number of combustion misfires, a fault signal is generated and output.

**5.** Method according to one of the preceding claims, **characterized in that** a threshold value for the measure of the combustion misfire is formed at least as a function of least one parameter of the internal combustion engine, the generation of the fault signal ceasing in the event of an overshooting or undershooting of this threshold value by the comparison result.

**6.** Method according to one of the preceding claims, **characterized in that** the method is not carried out in the event of a deviation from permissible value ranges for the predeterminable parameters of the internal combustion engine and/or for the predeterminable ambient parameters of the internal combustion engine.

**7.** Method according to one of the preceding claims, applied to an on-board diagnostic device at least for the internal combustion engine driving a vehicle, in particular a passenger car.

## Revendications

**1.** Procédé pour déterminer des ratés de combustion sur un moteur à combustion interne à plusieurs cylindres, **caractérisé en ce que** deux périodes consécutives de compression et d'expansion sont déterminées pour au moins un cylindre du moteur à combustion interne, une comparaison entre la modification des périodes de compression et la modification des périodes d'expansion étant réalisée pour déterminer des ratés de combustion et le résultat de ladite comparaison étant une dimension pour les ratés de combustion.

**2.** Procédé selon la revendication 1, **caractérisé en ce que** le procédé est réalisé en fonction de paramètres prédéfinissables du moteur à combustion interne et/ou de paramètres d'environnement prédéfinissables du moteur à combustion interne.

**3.** Procédé selon l'une quelconque des revendications 1 ou 2, **caractérisé en ce que** le procédé est réalisé pour chaque cylindre du moteur à combustion interne.

**4.** Procédé selon l'une quelconque des revendications 1 à 3, **caractérisé en ce que**, à l'issue de la détection d'au moins un raté de combustion, notamment d'un nombre prédéfinissable de ratés de combustion, un signal de défauts est généré et émis.

**5.** Procédé selon l'une quelconque des revendications précédentes, **caractérisé en ce qu'**au moins en fonction d'au moins un paramètre du moteur à combustion interne, une valeur seuil est formée pour la dimension d'un raté de combustion, la génération d'un signal de défaut n'ayant pas lieu en cas de dépassement ou de non-atteinte de ladite valeur seuil par ledit résultat de ladite comparaison.

**6.** Procédé selon l'une quelconque des revendications précédentes, **caractérisé en ce que**, le procédé est réalisé en cas d'écart par rapport à des plages de valeurs admissibles pour les paramètres prédéfinissables du moteur à combustion interne et/ou par rapport à des paramètres d'environnement prédéfinissables pour le moteur à combustion interne.

**7.** Procédé selon l'une quelconque des revendications précédentes, utilisé dans un système de diagnostic embarqué destiné à au moins un moteur à combustion interne entraînant au moins un véhicule, notamment un véhicule de tourisme.

Figur 1

EP 0 927 346 B1

Figur 2

EP 0 927 346 B1

Figur 3

EP 0 927 346 B1

Figur 4

EP 0 927 346 B1

Kurbelwellen-
Sensor-Signal

Last

Motortemperatur

1 Zahnflankenkorrektur

2 Kompensation
Instationärbetrieb

3

4

5 Schwellwertermittlung

6 Grundschwellwertermittlung

7 Temperaturkompensation

8 Änderungsbegrenzung

9 nein — ja

10 Detektion
erlaubt? nein — ja

11 Deaktivierung
der VA-Diagnose

12 statistische Auswertung
Katalysatorschädigung?
Emissionsgrenzwertüberschreitung?

ja

13 Reaktion auf katalysatorschädigende VA-Rate

ja

14

Figur 5